# EUROPÄISCHE PATENTSCHRIFT

(11) **EP 2 415 538 B1**
(45) Veröffentlichungstag und Bekanntmachung des Hinweises auf die Patenterteilung: **28.08.2013**
(21) Anmeldenummer: 11006363.3
(22) Anmeldetag: 03.08.2011
(51) Int. Cl.: B21D 43/14, B65G 29/00, B65G 47/84

(54) **Vorrichtung zur Bearbeitung von Werkstücken**
Device for processing workpieces
Dispositif destiné au traitement de pièces

(30) Priorität: 07.08.2010 DE 102010033749
(43) Veröffentlichungstag der Anmeldung: 08.02.2012
(73) Patentinhaber: Mall + Herlan GMBH, 76327 Pfinztal (DE)
(72) Erfinder: Breil, Anton, 73084 Salach (DE)
(74) Vertreter: Dimmerling & Huwer

(56) Entgegenhaltungen:
- EP-A1- 1 060 831
- DE-A1- 10 325 693
- DE-A1- 19 810 238
- DE-A1-102009 010 280
- DE-C1- 3 908 394
- GB-A- 2 004 805

## Beschreibung

Die Erfindung betrifft eine Vorrichtung zur Bearbeitung von Werkstücken, mit wenigstens einer ersten Bearbeitungsstation, in der die Werkstücke während einer Arbeitsphase bearbeitbar sind, und einer Transporteinheit, die einen Revolverkopf aufweist, an dem erste Aufnahmen für die Werkstücke verstellbar angeordnet sind und mittels der die Werkstücke der ersten Bearbeitungsstation durch Transport in eine Transportrichtung zuführbar sind, wobei in Transportrichtung hinter der ersten Bearbeitungsstation in einem Abstand wenigstens eine zweite Bearbeitungsstation angeordnet ist.

Eine derartige Vorrichtung ist aus DE-A 10 2009 010 280 A1 bekannt. Sie weist ein Fördersystem auf, das mehrere in Transportrichtung des Fördersystems hintereinander angeordnete Aufnahmen für Werkstücke aufweist, die als quer zur Transportrichtung verstellbare Bearbeitungstische ausgestaltet sind. Mit Hilfe der Transporteinrichtung können die an den Aufnahmen befindlichen, in Transportrichtung zueinander beabstandeten Werkstücke zugeführt werden. Der Durchsatz der Vorrichtung wird durch die Bearbeitungsstation mit der längsten Bearbeitungsdauer begrenzt und ist daher entsprechend gering.

Aus DE-C-39 08 394 ist ferner eine Vorrichtung zur Bearbeitung von Werkstücken bekannt, die eine erste Bearbeitungsstation hat, in der die Werkstücke bearbeitbar sind. Die Vorrichtung hat eine rotierende Transporteinheit, die erste Aufnahmen für die Werkstücke aufweist, und mittels der die Werkstücke der ersten Bearbeitungsstation während der Transportphase durch Transport entlang einer Kreisbahn in eine Transportrichtung zuführbar sind. In Transportrichtung hinter der ersten Bearbeitungsstation ist in einem Abstand wenigstens eine zweite Bearbeitungsstation angeordnet ist. Auch bei dieser Vorrichtung wird der Durchsatz der Vorrichtung durch die Bearbeitungsstation mit der längsten Bearbeitungsdauer begrenzt.

Eine Vorrichtung der eingangs genannten Art ist außerdem aus EP-A 1 060 831 bekannt. Die Vorrichtung hat eine rotierende Transporteinheit, mittels der die Waren um ein Zentrum von einer ersten zu einer zweiten Bearbeitungsstation transportiert werden können. Die Transporteinheit weist mehrere, die Waren haltende Arme auf, die radial zum Zentrum verschiebbar sind.

Von der Patentanmelderin wird außerdem seit vielen Jahren eine Vorrichtung hergestellt und vertrieben, die wenigstens eine erste Bearbeitungsstation aufinreist, in der die Werkstücke während einer Arbeitsphase eines aus der Arbeitsphase und einer Transportphase bestehenden Bearbeitungstaktes bearbeitbar sind, und die eine Transporteinheit hat, die erste Aufnahmen für die Werkstücke aufweist, und mittels der die Werkstücke der ersten Bearbeitungsstation während der Transportphase durch Transport in eine Transportrichtung zuführbar sind. Bei der bekannten Vorrichtung werden Metalldosen mittels einer als Trommel ausgebildeten Transporteinheit einer Bearbeitungsstation zugeführt, in der die Ränder der Dosen beschnitten werden. Nachdem der Rand einer Dose beschnitten ist, wird die betreffende Dose an eine Abnahmeeinheit übergeben, mittels der die Dosen an eine weitere Station zur weiteren Bearbeitung übergeben werden.

Da die Beschneidung der Dosenränder relativ viel Zeit in Anspruch nimmt und während dieser Zeit von der Vorrichtung keine sonstigen Aktionen durchgeführt werden können, wird der Durchsatz der Vorrichtung von der Bearbeitungsstation vorgegeben. Das heißt der Durchsatz der Vorrichtung wird durch die Zeit, die zum Beschneiden der Dosenränder benötigt wird, begrenzt. Da das Beschneiden der Dosenränder relativ lange dauert, ist der Durchsatz der Vorrichtung entsprechend gering.

Aus GB 2 004 805 A, DE 198 19 238 A1 und DE 102 25 693 A1 sind Vorrichtungen der eingangs genannten Art bekannt, die eine Transporteinheit mit einem Revolverkopf haben, an dem erste Aufnahmen für die Werkstücke verstellbar angeordnet sind und mittels der die Werkstücke der ersten Bearbeitungsstation in eine Transportrichtung zuführbar sind. Die Vorrichtungen weisen mehrere Bearbeitungsstationen auf, die auf einem Rad hintereinander angeordnet sind, das sich während der Bearbeitung kontinuierlich dreht.

Es ist Aufgabe der Erfindung, eine eingangs genannte Vorrichtung derart auszubilden, dass sie einen höheren Durchsatz hat und den Bearbeitungsstationen auf einfache Weise und in kompakter Bauform Werkstücke zugeführt werden können.

Diese Aufgabe wird mit den Merkmalen des Anspruchs 1 gelöst. Vorteilhafte Weiterbildungen der Erfindung ergeben sich aus den Unteransprüchen.

Dadurch, dass in Transportrichtung hinter der ersten Bearbeitungsstation wenigstens eine zweite Bearbeitungsstation, die regelmäßig dieselbe Bearbeitung vornimmt wie die erste Bearbeitungsstation, angeordnet ist, lässt sich der Durchsatz der Vorrichtung erhöhen. Denn dadurch, dass in Transportrichtung hinter der ersten Bearbeitungsstation wenigstens eine zweite Bearbeitungsstation angeordnet ist, lassen sich wenigstens zwei Werkstücke gleichzeitig bearbeiten. Dadurch, dass die ersten Aufnahmen in und/oder gegen die Transportrichtung verschwenk- und/oder verschiebbar an der Transporteinheit angeordnet sind, lässt sich erreichen, dass die ersten Aufnahmen in einem Takt verstellt werden, dessen Frequenz größer ist als die Frequenz des Bearbeitungstaktes. So lassen sich beispielsweise während des Bearbeitungstaktes ein oder mehrere Zwischentakte zum Verstellen der ersten Aufnahmen einfügen. Hierdurch erhöht sich der Bestückungstakt, in dem der Vorrichtung Werkstücke zugeführt werden, deutlich.

Um im Falle von zwei Bearbeitungsstationen beide Bearbeitungsstationen im Bearbeitungstakt der Vorrichtung mit Werkstücken versorgen zu können, sind die ersten Aufnahmen vorzugsweise derart ausgebildet, dass sie zwei Werkstücke gleichzeitig aufnehmen können. Sofern mehr als zwei Bearbeitungsstationen hintereinander angeordnet sind, müssen von den ersten Aufnahmen entsprechend viele Werkstücke aufnehmbar sein. Somit werden im Bearbeitungstakt der Vorrichtung entsprechend der Anzahl der Werkstücke, die in einer ersten Aufnahme angeordnet sind, gleichzeitig wenigstens zwei oder gegebenenfalls mehrere Werkstücke mittels der Transporteinheit durch die Vorrichtung transportiert. Entsprechend der Anzahl der Werkstücke, die gleichzeitig durch die Vorrichtung transportiert werden, erhöht sich der Bestückungstakt der Vorrichtung.

Mit anderen Worten, dadurch, dass der Takt in dem die ersten Aufnahmen verstellbar sind, größer ist, als der Bearbeitungstakt, in dem die Transporteinheit verstellbar ist, lassen sich die ersten Aufnahmen beziehungsweise lässt sich die Transporteinheit mit Werkstücken in einem Takt bestücken, der einem vielfachen, beispielsweise dem doppelten des Bearbeitungstaktes entspricht.

Dies wird dadurch erreicht, dass durch die Verstellung, insbesondere durch die Verschwenkung und/oder Verschiebung der ersten Aufnahmen während der Bearbeitung der Werkstücke in den Bearbeitungsstationen, das heißt, während der Arbeitsphase des Bearbeitungstaktes ein Zwischentakt erzeugt wird beziehungsweise im Falle von mehr als zwei Bearbeitungsstationen mehrere Zwischentakte erzeugt werden. Mit anderen Worten, während die Transporteinheit keine Bewegung ausführt, wird gemäß einer besonderen Ausführungsform der Erfindung diejenige erste Aufnahme, der Werkstücke zugeführt werden sollen, verschwenkt und/oder verschoben, wodurch ein Zwischentakt erzeugt wird.

Zur Verdeutlichung der Funktionsweise wird nachfolgend die Zuführung von Werkstücken, mit denen die Transporteinheit in einem Bestückungstakt bestückt wird, an zwei Bearbeitungsstationen näher beschrieben.

Nachdem die Transporteinheit einen Transportschritt durchgeführt hat, befindet sich eine betreffende erste Aufnahme in einer Position, in der sie mit einem ersten Werkstück bestückt werden kann. Nachdem sich das erste Werkstück in der ersten Aufnahme befindet, wird die erste Aufnahme in Transportrichtung der Zuführeinheit derart verstellt, dass sie mit einem zweiten Werkstück bestückt werden kann. Letzteres geschieht etwa in der Mitte der Arbeitsphase.

Nachdem sich das zweite Werkstück in der ersten Aufnahme befindet, was etwa am Ende der Arbeitsphase der Fall ist, wird die Transporteinheit um einen Transportschritt verstellt, sodass die erste Aufnahme, in der sich die beiden Werkstücke befinden, in eine Position gelangt, in der die Werkstücke an die beiden Bearbeitungsstationen abgegeben werden können beziehungsweise gleichzeitig von den beiden Bearbeitungsstationen bearbeitet werden können.

Durch die Verstellung der Transporteinheit um einen Transportschritt gelangt die nachfolgende erste Aufnahme in die Position, in der sie mit einem ersten Werkstück bestückt werden kann. Somit kann während der Bearbeitung der Werkstücke die nachfolgende erste Aufnahme in der zuvor beschriebenen Weise mit Werkstücken bestückt werden.

In gleicher Weise können der vorhergehenden ersten Aufnahme, das heißt der ersten Aufnahme, deren Werkstücke bereits in den Bearbeitungsstationen bearbeitet wurden, die sich in ihr befindenden Werkstücke entnommen werden. Das heißt, nach Durchführung eines Transportschritts der Transporteinheit befindet sich die vorhergehende erste Aufnahme in einer Position, in der ihr ein Werkstück entnommen werden kann. Nachdem der ersten Aufnahme das Werkstück entnommen wurde, was etwa in der Mitte einer Arbeitsphase der Fall ist, wird die erste Aufnahme verschwenkt und/oder verschoben, so dass sie sich in einer Position befindet, in der ihr das zweite Werkstück entnommen werden kann. Somit erhöht sich der Abgabetakt, das heißt der Takt, in dem die Vorrichtung Werkstücke abgibt, in gleicher Weise wie der Bestückungstakt, deutlich.

Aus konstruktiven Gründen kann es erforderlich sein, die Bearbeitungsstationen in einem solchen Abstand hintereinander anzuordnen, der es nicht mehr gestattet, dass Werkstücke, die sich in ein und derselben ersten Aufnahme befinden, gleichzeitig bearbeitet werden können. Daher ist bei einer besonderen Ausführungsform der Erfindung vorgesehen, dass die zweite Bearbeitungsstation in einem solchen Abstand hinter der ersten Bearbeitungsstation angeordnet ist, der einem Transportschritt zuzüglich des Abstands, in dem die Werkstücke in der ersten Aufnahme angeordnet sind, entspricht.

Hierdurch ist es möglich, in der ersten Bearbeitungsstation zunächst das der ersten Aufnahme als zweites zugeführte Werkstück, welches in Transportrichtung hinter dem der ersten Aufnahme als erstes zugefügte Werkstück angeordnet ist, zu bearbeiten und, nachdem die Transporteinheit einen Transportschritt durchgeführt hat, in der zweiten Bearbeitungsstation das der ersten Aufnahme als erstes zugeführte Werkstück, welches in Transportrichtung vor dem der ersten Aufnahme als zweites zugefügte Werkstück angeordnet ist, zu bearbeiten.

Sollte es erforderlich sein, dass die zweite Bearbeitungsstation nicht in einem solchen Abstand hinter der ersten Bearbeitungsstation angeordnet wird, der einem Transportschritt zuzüglich des Abstands, in dem die Werkstücke in der ersten Aufnahme angeordnet sind, entspricht, sondern um einen Differenzabstand mehr oder weniger, so kann dieser Differenzabstand durch eine entsprechende Verstellung der betreffenden ersten Aufnahme korrigiert werden. Daher ist bei einer besonderen Ausführungsform der Erfindung vorgesehen, dass der zuzügliche Abstand, um den der Weg, den die ersten Aufnahmen während eines Transportschrittes zurücklegen, ergänzt wird, um einen Korrekturwert verändert ist.

Bei der Erfindung ist vorgesehen, dass die Transporteinheit einen Revolverkopf aufweist, der im Bearbeitungstakt jeweils um einen Winkel verstellbar ist. Hierdurch lassen sich den Bearbeitungsstationen auf einfache Weise und in kompakter Bauform Werkstücke zuführen.

Des Weiteren lässt sich auf einfache Weise eine präzise Verstellung der Aufnahmen erreichen. So können die ersten Aufnahmen jeweils an einem Hebelarm angeordnet sein, der um eine Schwenkachse schwenkbar mit dem Revolverkopf verbunden ist, wie dies bei einer weiteren besonderen Ausführungsform der Erfindung vorgesehen ist. Die Hebelarme lassen sich zur Erzeugung einer Schwenkbewegung auf einfache Weise mit einem Antrieb verbinden.

In vorteilhafter Weise ist der Hebelarm Teil eines mehrarmigen Hebels, wodurch der Antrieb mittels einer Kurvenscheibe vorgenommen werden kann. Hierzu muss derjenige Arm des Hebels, der bezüglich der Schwenkachse des Hebels jenseits der ersten Aufnahmen angeordnet ist, mit der Kurvenscheibe in Wirkverbindung stehen. Durch die Kurvenscheibe ist es möglich, gleichzeitig mehrere Hebel und damit die an den betreffenden Hebelarmen angeordneten ersten Aufnahmen zu verstellen. Statt die Hebelarme mittels einer Kurvenscheibe anzutreiben könnten sie auch direkt mittels Servomotoren oder pneumatischer beziehungsweise hydraulischer Antriebe angetrieben werden.

Bei einer weiteren besonderen Ausführungsform der Erfindung ist in Transportrichtung hinter der zweiten Bearbeitungsstation eine Abnahmeeinheit angeordnet, welche zweite Aufnahmen aufweist, welche im Abgabetakt der Vorrichtung verstellbar sind. In vorteilhafter Weise entspricht der Abgabetakt einem ganzzahligen Vielfachen des Bearbeitungstaktes. Die Werkstücke werden der Transporteinheit in der oben bereits beschriebenen Weise entnommen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine schematische Darstellung einer erfindungsgemäßen Vorrichtung in einem ersten Betriebszustand,
- Fig. 2: eine schematische Darstellung einer erfindungsgemäßen Vorrichtung in einem zweiten Betriebszustand,
- Fig. 3: eine schematische Darstellung einer erfindungsgemäßen Vorrichtung in einem dritten Betriebszustand und
- Fig. 4: eine schematische Darstellung einer erfindungsgemäßen Vorrichtung in einem vierten Betriebszustand,

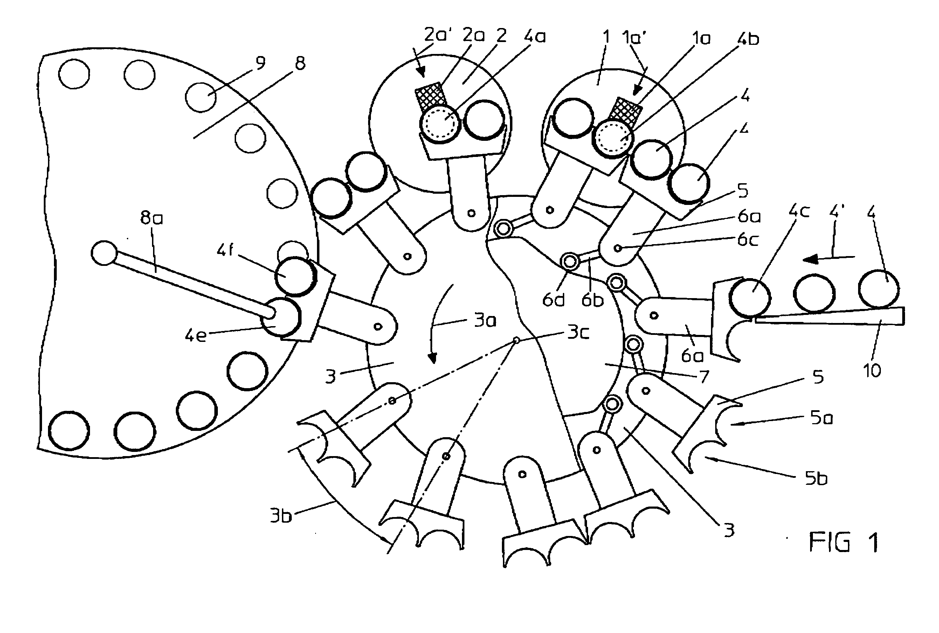

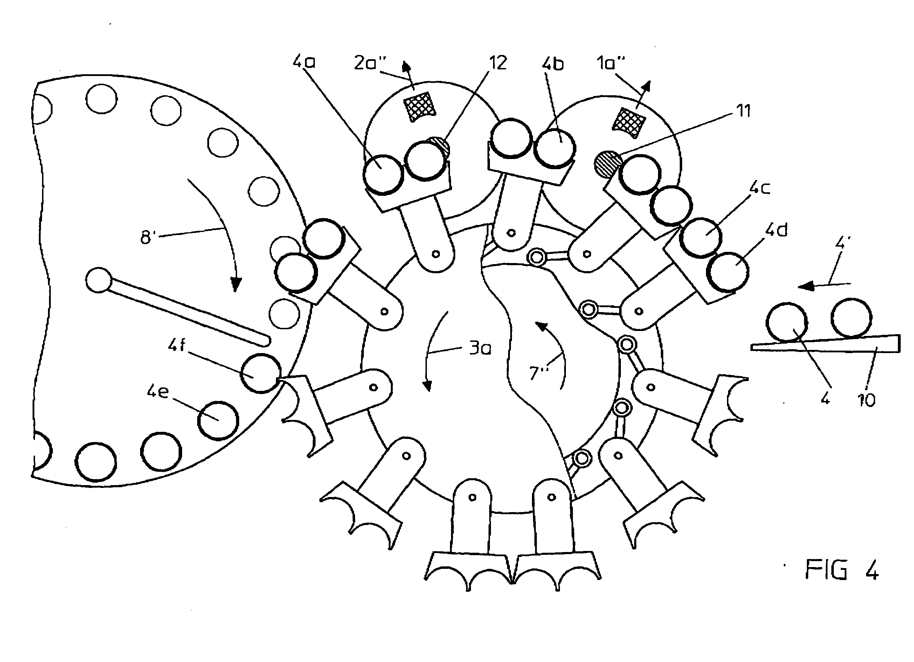

Wie beispielsweise Figur 1 entnommen werden kann, weist eine erfindungsgemäße Vorrichtung eine erste zum Beschneiden der Ränder von Dosen 4 ausgebildete Bearbeitungsstation 1 und eine zweite zum Beschneiden der Ränder von Dosen 4 ausgebildete Bearbeitungsstation 2 auf. Die von der ersten Bearbeitungsstation 1 zu bearbeitende Dose 4b ist in dem in Figur 1 dargestellten Betriebszustand auf einem sich im Zentrum einer Schneidevorrichtung befindlichen Dorn 11 (Figur 4) aufgeschoben. Sie ist mittels einer Klemmbacke 1a in ihrer Stellung fixiert, so dass sie am Rand mittels der Schneidevorrichtung beschnitten werden kann. In gleicher Weise ist die von der zweiten Bearbeitungsstation 2 zu bearbeitende Dose 4a mittels einer zweiten Klemmbacke 2a auf einem sich im Zentrum einer Schneidevorrichtung befindlichen Dorn 12 (Figur 4) fixiert. Die zum Fixieren der Dosen 4b, 4a erforderlich Bewegung der Klemmbacken 1a, 2a ist in Figur 1 durch Pfeile 1a', 2a' angedeutet.

Die Dosen 4, 4a, 4b sind in Aufnahmen 5 angeordnet, welche jeweils zwei Schalen haben, so dass sie jeweils zwei Dosen gleichzeitig aufnehmen können. Die Aufnahmen 5 sind an einem ersten Hebelarm 6a eines um eine Schwenkachse 6c schwenkbaren zweiarmigen Hebels 6a, 6b befestigt.

An dem zweiten Hebelarm 6b des Hebels 6a, 6b, der bezüglich der Schwenkachse 6c jenseits der ersten Aufnahmen 5 angeordnet ist, sind Rollen 6d angeordnet, welche auf dem Rand einer Kurvenscheibe 7 abrollen. Der Antrieb der Kurvenscheibe 7 erfolgt mittels eines in der Figur nicht dargestellten Servomotors.

Damit die Rollen 6d dem Rand der Kurvenscheibe 7 auch in Richtung zum Drehpunkt der Kurvenscheibe 7 folgen, wird auf den ersten Hebelarm 6a und/oder den zweiten Hebelarm 6b mittels einer in der Figur nicht dargestellten Feder eine entsprechende Rückstellkraft ausgeübt. Statt die Rückstellkraft mittels einer Feder zu erzeugen, kann statt eines zweiarmigen Hebels ein dreiarmiger Hebel verwendet werden. Hierbei folgt der dritte Hebel einem entsprechenden Verlauf einer weiteren Kurvenscheibe.

Die Hebel 6a, 6b sind an einem um eine Achse 3c drehbaren Beschneidegetriebe 3 schwenkbar angeordnet. Die Drehrichtung des Beschneidegetriebes 3, die gleichzeitig die Transportrichtung der Dosen 4 beziehungsweise der Aufnahmen 5 ist, ist in Figur 1 durch einen Pfeil 3a dargestellt.

Die Drehung des Beschneidegetriebes 3 um die Drehachse 3c erfolgt schrittweise in einem Bearbeitungstakt. Da an dem Beschneidegetriebe 3 elf Hebel 6a, 6b angeordnet sind, beträgt die Schrittweite 3b etwa 32,73 Grad. Der Antrieb des Beschneidegetriebes 3 erfolgt ebenfalls mittels eines in der Figur nicht dargestellten Servomotors.

Die Bestückung der Aufnahmen 5 mit Dosen 4 erfolgt mittels einer schiefen Ebene 10, auf der die Dosen 4 in die durch einen Pfeil 4' angedeutete Richtung abrollen. In dem in Figur 1 dargestellten Betriebszustand befindet sich der betreffende Hebelarm 6a in einer solchen Position, dass die in Drehrichtung 3a des Beschneidegetriebes 3 vordere Schale 5a der betreffenden Aufnahme 5 mit einer Dose 4c bestückt werden kann.

In Drehrichtung 3a des Beschneidegetriebes 3 ist hinter der zweiten Bearbeitungsstation 2 eine als Trommel 8 ausgebildete Abnahmeeinheit angeordnet. Die Trommel 8 hat Dorne 9, auf welche Dosen 4 aufbringbar sind. Die Aufbringung der Dosen 4 auf die Dorne 9 geschieht mittels eines Schiebers 8a, mittels dem die Dosen 4 von der betreffenden Schale der Aufnahmen 5 auf die Dorne 9 geschoben werden.

In dem in Figur 1 dargestellten Betriebszustand befindet sich die in Drehrichtung 3a des Beschneidegetriebes 3 vordere Schale 5a der betreffenden Aufnahme 5 gegenüber einem Dorn 9 der Trommel 8, so dass die betreffende Dose 4e mittels des Schiebers 8a auf den Dorn 9 geschoben werden kann.

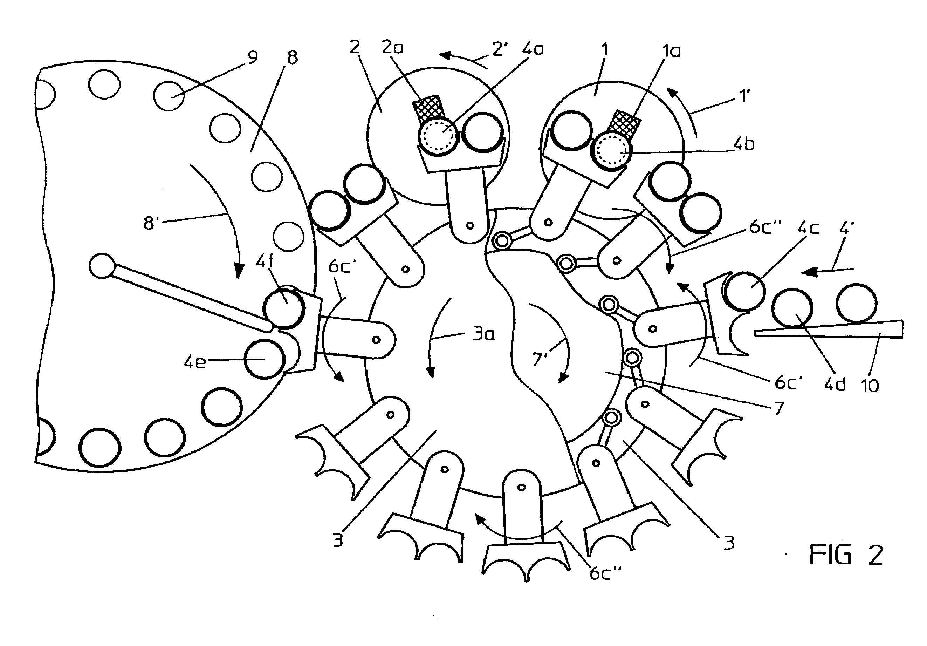

Nachdem die Klemmbacken 1a, 2a die durch die Pfeile 1a', 2a' angedeutete Bewegung durchgeführt haben, das heißt die betreffenden Dosen 4a, 4b fixiert sind, und die auf der schiefen Ebene 10 angeordnete Dosen 4 die durch den Pfeil 4' angedeutete Bewegung durchgeführt haben, das heißt sich die vordere Dose 4c in der Schale 5a der betreffenden Aufnahme 5 befindet, sowie der Schieber 8a die betreffende Dose 4e auf den Dorn 9 der Trommel 8 geschoben hat, beginnt der in Figur 2 dargestellte Betriebszustand.

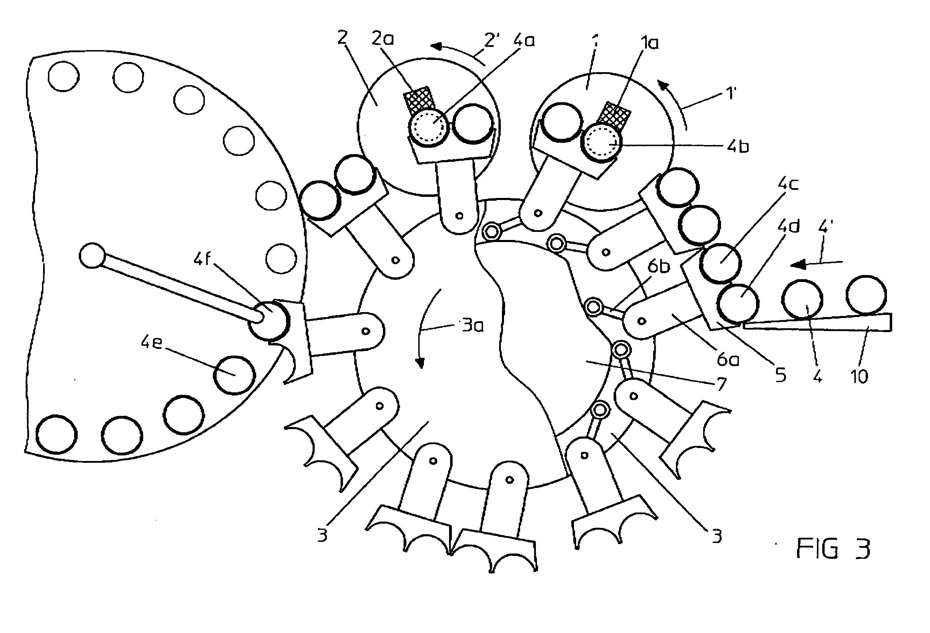

Das heißt, die Schneidevorrichtungen der beiden Bearbeitungsstationen 1, 2 beginnen ihre Tätigkeit, das heißt beschneiden die Ränder der sich in den Schneidevorrichtungen befindlichen Dosen 4b, 4a. Dies ist durch die Pfeile 1', 2' angedeutet. Gleichzeitig dreht sich die Kurvenscheibe 7 in die durch den Pfeil 7' angedeutete Richtung. Hierdurch werden im Ergebnis die betreffenden Hebelarme 6a und damit die zugehörigen Aufnahmen 5 in die durch die Pfeile 6c', 6c" angedeutete Richtungen verschwenkt. Gleichzeitig dreht sich die Trommel 8 in die durch den Pfeil 8' angedeutete Richtung. Nach Abschluss der vorstehend genannten Bewegungen befindet sich die Vorrichtung in dem in Figur 3 dargestellten Betriebszustand.

Das heißt, die in Drehrichtung 3a des Beschneidegetriebes 3 hintere Schale 5b der vor der schiefen Ebene 10 angeordneten Aufnahme 5 befindet sich in einer solchen Position, dass sie mit einer Dose 4d bestückt werden kann. Des Weiteren befindet sich die in Drehrichtung 3' des Beschneidegetriebes 3 hintere Schale 5b der vor der Trommel 8 angeordneten Aufnahme 5 vor einem Dorn 9 der Trommel 8.

Nachdem sich die Dose 4d in der hinteren Schale 5b der vor der schiefen Ebene 10 angeordneten Aufnahme 5 befindet und die vor der Trommel 8 angeordnete Dose 4f mittels des Schiebers 8a auf den betreffenden Dorn 9 der Trommel 8 geschoben wurde, sowie die Ränder der in den Bearbeitungsstationen 1, 2 angeordneten Dosen 4a, 4b beschnitten wurden, wird die Klemmung der Dosen 4a, 4b mittels der Klemmbacken 1a, 2a aufgehoben. Das heißt, die Klemmbacken 1a, 2a werden in die durch die Pfeile 1a", 2a" (Figur 4) angedeutete Richtung verstellt. Danach wird das Beschneidegetriebe 3 um einen Schritt verstellt. Die Verstellung des Beschneidegetriebes 3 ist durch einen Pfeil 3a in Figur 4 angedeutet.

Gleichzeitig mit der Verstellung des Beschneidegetriebes 3 wird die Kurvenscheibe 7 in die durch den Pfeil 7" angedeutete Richtung verstellt. Da sich das Beschneidegetriebe 3 und die Kurvenscheibe 7 gleichzeitig drehen, findet zwischen den beiden Elementen keine Relativbewegung statt. Hierdurch führen die betreffenden Hebelarme 6a keine Schwenkbewegung durch.

Des Weiteren führt die Trommel 8 einen Schritt in die durch den Pfeil 8' angedeutete Richtung durch. Nach Abschluss der vorstehend genannten Bewegungen befindet sich die Vorrichtung wieder in dem in Figur 1 dargestellten Betriebszustand. Das heißt, die in Drehrichtung 3a des Beschneidegetriebes 3 vordere Schale 5a der dann vor der schiefen Ebene 10 angeordneten Aufnahme 5 befindet sich in einer solchen Position, dass sie mit einer Dose 4c bestückt werden kann. Des Weiteren befindet sich die in Drehrichtung 3a des Beschneidegetriebes 3 hintere Schale 5b der betreffenden Aufnahme 5 in einer solchen Position, dass die betreffende Dose 4b auf den Dorn 11 aufgeschoben werden kann. Ebenso befindet sich die in Drehrichtung 3a des Beschneidegetriebes 3 vordere Schale der betreffenden Aufnahme 5 in einer solchen Position, dass die betreffende Dose 4a auf den Dorn 12 der zweiten Bearbeitungsstation 2 geschoben werden kann. Darüber hinaus befindet sich die in Drehrichtung 3a des Beschneidegetriebes 3 vordere Schale 5a der betreffenden Aufnahme 5 vor einem Dorn 9 der Trommel 8, sodass die in der vorderen Schale 5a angeordnete Dose 4e mittels des Schiebers 8a auf den betreffenden Dorn 9 geschoben werden kann.

Dann werden die in den Bearbeitungsstationen 1,2 angeordneten Dosen 4a, 4b mittels der Klemmbacken 1a, 2a fixiert und der zuvor beschriebene Vorgang beginnt aufs Neue.

## Patentansprüche

1. Vorrichtung zur Bearbeitung von Werkstücken (4), mit wenigstens einer ersten Bearbeitungsstation (1), in der die Werkstücke (4) während einer Arbeitsphase eines aus der Arbeitsphase und einer Transportphase bestehenden Bearbeitungstaktes bearbeitbar sind, und einer Transporteinheit (3) die erste Aufnahmen (5) für die Werkstücke (4) aufweist, wobei die Transporteinheit einen Revolverkopf (3) aufweist, der im Bearbei tungstakt jeweils um einen Winkel (3b) verstellbar ist, und mittels der die Werkstücke (4) der ersten Bearbeitungsstation (1) während der Transportphase durch Transport in eine Transportrichtung (3a) zuführbar sind, wobei in Transportrichtung (3a) hinter der ersten Bearbeitungsstation (1) in einem Abstand wenigstens eine zweite Bearbeitungsstation (2) angeordnet ist, wobei die ersten Aufnahmen (5) in und/oder gegen die Transportrichtung verschwenkund/oder verschiebbar an der Transporteinheit (3) angeordnet sind, wobei die ersten Aufnahmen derart ausgebildet sind, dass sie mindestens zwei Werkstücke gleichzeitig aufnehmen können, und wobei während die Transporteinheit (3) keine Bewegung ausführt, diejenige erste Aufnahme, der Werkstücke zugeführt werden sollen, verschwenkt und/oder verschoben wird, um einen Zwischentakt zu erzeugen.

2. Vorrichtung nach Anspruch 1,
**dadurch gekennzeichnet,**
**dass** die Verstellung der ersten Aufnahmen (5) während der Arbeitsphase erfolgt.

3. Vorrichtung nach Anspruch 1 oder 2,
**dadurch gekennzeichnet,**
**dass** der Abstand, in dem die zweite Bearbeitungsstation (2) hinter der ersten Bearbeitungsstation (1) angeordnet ist, dem Weg entspricht, den die ersten Aufnahmen (5) während eines Transportschrittes zurücklegen, zu-züglich dem Abstand, in dem die Werkstücke (4) in den Aufnahmen (5) angeordnet sind.

4. Vorrichtung nach Anspruch 3,
**dadurch gekennzeichnet,**
**dass** der zuzügliche Abstand, um den der Weg, den die ersten Aufnahmen (5) während eines Transportschrittes zurücklegen, ergänzt wird, um einen Korrekturwert verändert ist.

5. Vorrichtung nach Anspruch 4,
**dadurch gekennzeichnet,**
**dass** die ersten Aufnahmen (5) jeweils an einem Hebelarm (6a) angeordnet sind, der um eine Schwenkachse (6c) schwenkbar mit dem Revolverkopf (3) verbunden ist.

6. Vorrichtung nach Anspruch 5,
**dadurch gekennzeichnet,**
**dass** der Hebelarm (6a) mit einem Antrieb (7) verbunden ist, zur Erzeugung einer Schwenkbewegung.

7. Vorrichtung nach Anspruch 6,
**dadurch gekennzeichnet,**
**dass** der Hebelarm (6a) Teil eines wenigstens zweiarmigen Hebels (6a, 6b) ist, und der Antrieb (7) eine Kurvenscheibe (7) aufweist, mit der derjenige Arm (6b) des Hebels (6a, 6b), der bezüglich der Schwenkachse (6c) des Hebels (6a, 6b) jenseits der ersten Aufnahmen (5) angeordnet ist, in Wirkverbindung steht.

8. Vorrichtung nach einem der Ansprüche 1 bis 7,
**dadurch gekennzeichnet,**
**dass** in Transportrichtung (3a) hinter der zweiten Bearbeitungsstation (2) eine Abnahmeeinheit (8) angeordnet ist, welche zweite Aufnahmen (9) aufweist, welche in einem Abnahmetakt verstellbar sind.

9. Vorrichtung nach Anspruch 8,
**dadurch gekennzeichnet,**
**dass** der Abnahmetakt einem ganzzahligen Vielfachen des Bearbeitungstaktes entspricht.

## Claims

1. An arrangement for machining workpieces (4) including at least a first machining station (1) in which the workpieces (4) can be machined during an operating phase of a machining cycle comprising the operating phase and a transport phase, and a transport unit (3) including first accommodation structures (5) for the workpieces (4), the transport unit comprising a revolving head (3) which is adjustable during the machining cycle in each case by an angle (3b), and by means of which the workpieces (4) can be supplied during the transport phase to the first machining station (1) by moving them in a transport direction (3a), at least one second machining station (2) being arranged in the transport direction (3a) in spaced relationship after the first machining station (1), the first accommodation structures (5) being disposed on the transport unit (3) so as to be pivotable and/or displaceable thereon in and/or counter to the transport direction, the first accommodation structures being designed such that they can accommodate at least two workpieces simultaneously, and, while the transport unit (3) is not carrying out any movement, those first accommodation structures to which workpieces are intended to be supplied being pivoted and/or displaced in order to generate an intermediate cycle.

2. The arrangement according to claim 1, wherein the first accommodation structures (5) are adjusted during the operating phase.

3. The arrangement according to claim 1 or 2, wherein the distance at which the second machining station (2) is arranged after the first machining station (1) corresponds to the travel length which the first accommodation structures (5) move during a transport step plus the distance at which the workpieces (4) are arranged in the accommodation structures (5).

4. The arrangement according to claim 3, wherein the additional distance, by which the travel length of the first accommodation structures (5) during a transport step is increased, is adjusted by a correction value.

5. The arrangement according to claim 4, wherein the first accommodation structures (5) are in each case arranged on a lever arm (6a) which is connected to the revolving head (3) so as to be pivotable about a pivot axis (6c).

6. The arrangement according to claim 5, wherein the lever arm (6a) is connected to a drive (7) for generating a pivot movement.

7. The arrangement according to claim 6, wherein the lever arm (6a) is part of a lever with at least two arms (6a, 6b) and the drive (7) includes a cam disc (7) with which the arm (6b) of the lever (6a, 6b) which is arranged, with respect to the pivot axis (6c) of the lever (6a, 6b), on the other side of the first accommodation structures (5) is operatively connected.

8. The arrangement according to one of claims 1 to 7, wherein in transport direction (3a) after the second machining station (2), a receiving unit (8) is arranged which includes second accommodation structures (9) which are adjustable in a transfer cycle.

9. The arrangement according to claim 8, wherein the transfer cycle is a whole number multiple of the machining cycle.

## Revendications

1. Dispositif pour usiner des pièces (4), comportant au moins un premier poste d'usinage (1) dans lequel les pièces (4) peuvent être usinées au cours d'une phase de travail d'un cycle d'usinage constitué d'une phase de travail et d'une phase de transport, et une unité de transport (3) qui présente des premiers logements (5) pour les pièces (4), l'unité de transport présentant une tourelle (3) qui peut être réglée à chaque fois d'un angle (3b) dans le cycle d'usinage et au moyen de laquelle les pièces (4) peuvent être alimentées au cours de la phase de transport jusqu'au premier poste d'usinage (1) en les déplaçant dans une direction de transport (3a), au moins un deuxième poste d'usinage (2) étant disposé dans la direction de transport (3a) à distance derrière le premier poste d'usinage (1), les premiers logements (5) étant disposés sur l'unité de transport (3) de manière à pouvoir pivoter et/ou à pouvoir être déplacés dans et/ou à l'encontre de la direction de transport, les premiers logements étant réalisés de telle sorte qu'ils puissent recevoir au moins deux pièces simultanément, et lorsque l'unité de transport (3) n'effectue aucun déplacement, le premier logement auquel des pièces doivent être acheminées étant pivoté et/ou déplacé afin de produire un cycle intermédiaire.

2. Dispositif selon la revendication 1,
**caractérisé en ce que**
le réglage des premiers logements (5) a lieu pendant la phase de travail.

3. Dispositif selon la revendication 1 ou 2,
**caractérisé en ce que**
la distance à laquelle le deuxième poste d'usinage (2) est disposé derrière le premier poste d'usinage (1) correspond à la longueur de déplacement parcourue par les premiers logements (5) au cours d'une étape de transport plus la distance à laquelle les pièces (4) sont agencées dans les logements (5).

4. Dispositif selon la revendication 3,
**caractérisé en ce que**
la distance supplémentaire de laquelle est augmentée la longueur de déplacement des premiers logements (5) au cours d'une étape de transport est ajustée d'une valeur de correction.

5. Dispositif selon la revendication 4,
**caractérisé en ce que**
les premiers logements (5) sont, dans chaque cas, disposés sur un bras de levier (6a) qui est connecté à la tourelle (3) de manière à pouvoir pivoter autour d'un axe de pivotement (6c).

6. Dispositif selon la revendication 5,
**caractérisé en ce que**
le bras de levier (6a) est connecté à un entraînement (7) pour produire un mouvement de pivotement.

7. Dispositif selon la revendication 6,
**caractérisé en ce que**
le bras de levier (6a) fait partie d'un levier ayant au moins deux bras (6a, 6b) et l'entraînement (7) présente un disque de came (7) avec lequel est en liaison fonctionnelle le bras (6b) du levier (6a, 6b) qui est disposé, par rapport à l'axe de pivotement (6c) du levier (6a, 6b), au-delà des premiers logements (5).

8. Dispositif selon l'une quelconque des revendications 1 à 7,
**caractérisé en ce que**
dans la direction de transport (3a), derrière le deuxième poste d'usinage (2), est agencée une unité de réception (8) qui comporte des deuxièmes logements (9) qui peuvent être réglés dans un cycle de réception.

9. Dispositif selon la revendication 8,
**caractérisé en ce que**
le cycle de réception est un multiple entier du cycle d'usinage.
